# EUROPÄISCHE PATENTSCHRIFT

(11) **EP 2 781 389 B1**
(45) Veröffentlichungstag und Bekanntmachung des Hinweises auf die Patenterteilung: **04.04.2018**
(21) Anmeldenummer: 14157056.4
(22) Anmeldetag: 27.02.2014
(51) Int. Cl.: B60K 6/40, B60K 6/405, B60K 6/48, F16H 55/36

(54) **Kraftfahrzeug-Antriebsstrang**
Motor vehicle power train
Chaîne cinématique d'un véhicule automobile

(30) Priorität: 21.03.2013 DE 102013004874
(43) Veröffentlichungstag der Anmeldung: 24.09.2014
(73) Patentinhaber: GETRAG B.V. & Co. KG, 74199 Untergruppenbach (DE)
(72) Erfinder: Blessing, Uli Christian, 74078 Heilbronn (DE); Meissner, Jörg, 74626 Bretzfeld (DE); Hoffmeister, Thomas, 70825 Korntal-Münchingen (DE); Ihben, Harald, 71640 Ludwigsburg (DE); Knöpfle, Philipp, 71636 Ludwigsburg (DE)
(74) Vertreter: Witte, Weller & Partner Patentanwälte mbB

(56) Entgegenhaltungen:
- WO-A1-2012/137151
- FR-A1- 2 689 821
- FR-A1- 2 772 675
- FR-A1- 2 975 047

## Beschreibung

Die vorliegende Erfindung betrifft einen Antriebsstrang für ein Kraftfahrzeug, mit einem Verbrennungsmotor, der eine Kurbelwelle aufweist und zur Bereitstellung von Antriebsleistung für das Kraftfahrzeug ausgelegt ist, mit einer Kupplungsanordnung, die ein Eingangsglied und wenigstens ein Ausgangsglied aufweist, wobei das Eingangsglied mit der Kurbelwelle verbunden ist, mit einer Getriebeanordnung zur Einrichtung einer Mehrzahl von Gangstufen, wobei die Getriebeanordnung ein Getriebegehäuse, wenigstens eine Eingangswelle und wenigstens eine Ausgangswelle aufweist, wobei die Ausgangswelle mit angetriebenen Rädern des Kraftfahrzeugs verbindbar ist, und mit einer elektrischen Maschine, die zur Bereitstellung von Antriebsleistung für das Kraftfahrzeug ausgelegt ist und mit einer Getriebewelle der Getriebeanordnung verbunden ist.

Ein derartiger Antriebsstrang ist allgemein bekannt und wird auch als Hybrid-Antriebsstrang bezeichnet, da Antriebsleistung sowohl von einem Verbrennungsmotor als auch von einer als Elektromotor betriebenen elektrischen Maschine bereitgestellt werden kann.

Dabei ist es bekannt, die elektrische Maschine mit einer Getriebeeingangswelle oder mit einer Getriebeausgangswelle zu verbinden.

Aus dem Dokument EP 1 554 154 B1 ist ein derartiger Antriebsstrang in Form eines automatisierten Schaltgetriebes bekannt, wobei die elektrische Maschine über eine Kupplung mit einer Ausgangswelle der Getriebeanordnung verbindbar ist, und wobei die elektrische Maschine ferner unter Umgehung der eingangsseitigen Kupplungsanordnung drehfest mit der Kurbelwelle des Verbrennungsmotors verbindbar ist, um den Verbrennungsmotor zu starten oder um von dem Verbrennungsmotor angetrieben zu werden. Die elektrische Maschine ist dabei generell außerhalb des Getriebegehäuses angeordnet und die Motorwelle erstreckt sich in das Getriebegehäuse hinein. In dem Getriebegehäuse ist die Ausgangswelle der elektrischen Maschine vorzugsweise mit einer Nebenwelle koaxial verbunden, an der Schaltkupplungen zur Realisierung der oben genannten Funktionen angeordnet sind.

Das Dokument DE 200 23 598 U1 offenbart einen Kfz-Hybridantrieb mit Elektro-Starter-Generator, der im Riementrieb am Verbrennungsmotor integriert ist, und zwar an einer Stirnseite des Verbrennungsmotors. Ein ähnliches Elektro-Hybridsystem ist aus dem Dokument DE 101 03 188 A1 bekannt.

Ferner offenbart das Dokument DE 10 2008 002 381 A1, in einem Hybridantriebsstrang zwei elektrische Maschinen vorzusehen, wobei der Rotor von einer der elektrischen Maschinen entweder mit mindestens einem Rad oder einem Differential der ersten Fahrzeugachse oder mit mindestens einem Rad oder einem Differential der zweiten Fahrzeugachse fest oder über ein Zahnradgetriebe oder einen Ketten- oder Zahnriementrieb verbunden ist.

Aus der nicht vorveröffentlichten deutschen Patentanmeldung DE 10 2012 019 971 .6 ist ein Hybrid-Antriebsstrang für ein Kraftfahrzeug bekannt, bei dem eine elektrische Maschine in ein Getriebegehäuse integriert ist, was die Anbindung der elektrischen Maschine mittels einer geeigneten Übersetzung über einen Stirnradsatz vereinfacht.
Aus der französischen Patentanmeldung FR 2 772 675 A1, die die Merkmale des Oberbegriffs von Anspruch 1 offenbart, ist eine Übertragungsvorrichtung für Fahrzeuge mit Hybridantrieb bekannt, bei der ein Elektromotor an einem Getriebe angeordnet ist, dessen Primärwelle mit dem Verbrennungsmotor verbunden ist, wobei Antriebskraft des Elektromotors auf die Sekundärwelle des Getriebes über Zahnräder, die im Gehäuse des Getriebes vorgesehen sind, und die Primärwelle übertragen werden kann.

Vor diesem Hintergrund ist es eine Aufgabe der Erfindung, einen verbesserten Antriebsstrang für ein Kraftfahrzeug anzugeben, bei dem die Hybridisierung mit möglichst geringem Kosteneinsatz möglich ist.

Diese Aufgabe wird durch einen Antriebsstrang gemäß Anspruch 1 gelöst, wobei die Getriebewelle einen Wellenabschnitt aufweist, der sich aus dem Getriebegehäuse heraus erstreckt und mit der elektrischen Maschine über ein Zugmittelgetriebe verbunden ist.

Bei dieser Ausführungsform ist die elektrische Maschine generell außerhalb des Getriebegehäuses angeordnet, und zwar vorzugsweise zwischen zwei axialen Enden hiervon. Durch die Verbindung einer Motorwelle der elektrischen Maschine mit dem Wellenabschnitt der Getriebewelle kann dabei zum einen die Lage der elektrischen Maschine in Umfangsrichtung des Getriebegehäuses gesehen weitgehend frei gewählt werden. Hierdurch kann die elektrische Maschine auf einfache Art und Weise an dem Getriebegehäuse außen befestigt werden, insbesondere radial außen an dem Getriebegehäuse.

Ferner kann über das Zugmittelgetriebe eine geeignete Übersetzung realisiert werden, so dass auch hochdrehende und folglich kompakte elektrische Maschinen zur Hybridisierung verwendbar sind.

Insgesamt ergibt sich bei dem erfindungsgemäßen Antriebsstrang wenigstens einer der folgenden Vorteile:

Zum einen kann durch die Anbindung über ein Zugmittelgetriebe erreicht werden, dass die Anbindung ohne weitere Zahnradstufe oder über wenige Zahnradstufen erfolgen kann, so dass die kostenintensive Entwicklung und Umsetzung von Zahnradstufen vermieden werden kann. Ferner kann die Kühlung der elektrischen Maschine vereinfacht werden, da diese nicht in dem Getriebegehäuse angeordnet ist. Die Getriebeanordnung selbst muss demzufolge auch nicht notwendigerweise den Anforderungen für die Hochvolt-Technik gerecht werden, wie sie für elektrische Maschinen im Fahrzeugbau generell verwendet wird.

Insgesamt ergibt sich folglich ein weniger komplexes Design zur Kraftübertragung von der elektrischen Maschine in die Getriebeanordnung bzw. in umgekehrter Richtung. Die Montage der elektrischen Maschine kann ebenfalls vereinfacht werden. Zudem ergeben sich geringere Bauabweichungen gegenüber einem konventionellen Antriebsstrang, der keine elektrische Maschine aufweist. Das Getriebegehäuse kann dabei so ausgelegt sein, dass es entweder mit einer Welle realisiert wird, die einen sich aus dem Getriebegehäuse heraus erstreckenden Wellenabschnitt aufweist, oder aber eine Abdeckung für den Gehäuseausschnitt aufweisen, über den sich der Wellenabschnitt aus dem Getriebegehäuse heraus erstreckt. Demzufolge kann für beide Arten von Antriebsstrang ein einheitliches Gehäuse verwendet werden.

Ferner ergibt sich eine größere Gestaltungsfreiheit hinsichtlich der Wahl der elektrischen Maschine, also hinsichtlich von deren Abmessungen und/oder Leistungsdaten. Zudem kann eine klare Systemabgrenzung zwischen der Getriebeanordnung und den Komponenten der elektrischen Maschine erfolgen, wodurch die Validierung und die Testverantwortung vereinfacht werden. Schließlich können Komponenten genutzt werden, die in großen Stückzahlen bereits verfügbar sind oder die anderen Applikationen Anwendung finden und keine neuen Validierungen benötigen.

Das Zugmittelgetriebe kann ein Kettenantrieb oder ein Riemenantrieb sein. Der Riemenantrieb kann durch einen Keilriemen oder durch einen Zahnriemen realisiert sein, wobei ein Zahnriemen bevorzugt ist.

Die Leistung der elektrischen Maschine wird vorzugsweise auf einen Wert kleiner einem vorgegebenen Schwellenwert begrenzt, der an die Übertragungsfähigkeit des Zugmittelgetriebes angepasst ist. Dieser Grenzwert liegt vorzugsweise bei kleiner 25 kW, vorzugsweise bei kleiner 20 kW, insbesondere bei kleiner 15 kW. Die elektrische Maschine kann insbesondere mit einer Voltzahl betrieben sein, die kleiner ist als die üblichen Hoch-Volt-Anwendungen oder Plug-in-Anwendungen.

Die elektrische Maschine kann dabei an eine beliebige Getriebewelle angebunden werden, vorzugsweise eine Eingangswelle der Getriebeanordnung. Die elektrische Maschine kann jedoch auch an eine Ausgangswelle angebunden werden. Ferner ist es generell möglich, die elektrische Maschine über eine in der Getriebeanordnung vorgesehene Schaltkupplungsanordnung wahlweise mit der Eingangswelle oder der Ausgangswelle zu verbunden. Bei einem Doppelkupplungsgetriebe ist es ferner möglich, über eine derartige Schaltkupplungsanordnung die elektrische Maschine wahlweise mit dem einen oder dem anderen Teilgetriebe des Doppelkupplungsgetriebes zu verbinden.

Die Aufgabe wird somit vollkommen gelöst.

Gemäß einer besonders bevorzugten Ausführungsform ist die Getriebewelle die wenigstens eine Eingangswelle der Getriebeanordnung oder eine mit der Eingangswelle über eine feste Übersetzung verbundene Vorgelegewelle der Getriebeanordnung.

Bei dieser Ausführungsform kann die elektrische Maschine zum einen für einen rein elektrischen Antrieb genutzt werden, in welchem Fall die Kupplungsanordnung geöffnet ist, um den Verbrennungsmotor nicht mitzuschleppen. Andererseits kann die elektrische Maschine auch dazu verwendet werden, um den Verbrennungsmotor zu starten, in welchem Fall Schaltkupplungen in der Getriebeanordnung geöffnet werden, um eine Verbindung mit dem Abtrieb zu lösen.

Schließlich ist mit einer derartigen Verbindung auch eine Vielfalt weiterer Hybrid-Anwendungen möglich, wie beispielsweise ein Boost-Betrieb, ein Rekuperationsbetrieb, etc.

Gemäß einer weiteren bevorzugten Ausführungsform weist das Getriebegehäuse ein erstes, dem Verbrennungsmotor zugewandtes axiales Ende und ein zweites, dem Verbrennungsmotor abgewandtes axiales Ende auf, wobei das Zugmittelgetriebe an dem zweiten axialen Ende angeordnet ist.

Bei dieser Ausführungsform kann das Zugmittelgetriebe an die Getriebewelle angebunden werden, ohne in die in der Regel standardisierte Verbindung zwischen Kurbelwelle, Kupplungsanordnung und Getriebeanordnung eingreifen zu müssen.

Erfindungsgemäß weist der Wellenabschnitt, der sich aus dem Getriebegehäuse heraus erstreckt, einen Verzahnungsabschnitt auf, wobei ein erstes Zugmittelrad (wie z.B. eine Riemenscheibe oder ein Kettenrad) einen Gegenverzahnungsabschnitt aufweist und wobei das erste Zugmittelrad in axialer Richtung auf den Verzahnungsabschnitt aufgesteckt ist, um auf diese Weise eine drehfeste Verbindung zwischen dem ersten Zugmittelrad und dem Wellenabschnitt herzustellen.

Derartige Verzahnungsabschnitte werden in der Getriebetechnik üblicherweise verwendet, so dass deren Ausbildung kostengünstig erfolgen kann.

Ferner ist es insgesamt vorteilhaft, wenn das Zugmittelgetriebe ein erstes Zugmittelrad aufweist, wobei der Wellenabschnitt der Getriebewelle eine axiale Gewindebohrung aufweist und wobei das erste Zugmittelrad mittels einer Schraube axial an dem Wellenabschnitt festgelegt ist.

Hierdurch kann das Zugmittelrad auf einfache Art und Weise an dem Wellenabschnitt axial fixiert werden.

Dabei ist es von besonderem Vorzug, wenn das erste Zugmittelrad eine axiale Befestigungsbohrung aufweist, in der ein Kopf der Schraube und ein Dichtungselement aufgenommen sind.

Die axiale Befestigungsbohrung weist vorzugsweise einen größeren Durchmesser als die axiale Gewindebohrung auf. Durch das Dichtungselement kann vermieden werden, dass Verunreinigungen über den Gewindeeingriff zwischen Gewindebohrung und Schraube in das Innere des Getriebes gelangen und dass ein Fluidaustausch hierüber nicht möglich ist. Demzufolge kann kein Fluid von außen in das Getriebegehäuse eindringen, wie beispielsweise Wasser. Andererseits kann kein Getriebefluid aus dem Getriebegehäuse über diese Befestigungsanordnung austreten.

Das Dichtungselement kann beispielsweise durch einen Sprengring oder dergleichen axial in der axialen Befestigungsbohrung gesichert sein.

Erfindungsgemäß weist das Zugmittelgetriebe ein erstes Zugmittelrad auf, das einen sich um den Wellenabschnitt der Getriebewelle herum erstreckenden Hohlwellenabschnitt aufweist, wobei zwischen einem Gehäuseausschnitt des Getriebegehäuses und dem Außenumfang des Hohlwellenabschnittes des ersten Zugmittelrades eine Wellendichtung angeordnet ist.

Auch hierdurch kann die Fluiddichtigkeit zwischen Innenseite und Außenseite des Getriebegehäuses gewährleistet werden.

Der Hohlwellenabschnitt kann sich dabei vorzugsweise in axialer Richtung an einem auf der Innenseite des Getriebegehäuses angeordneten Wellenlager zur Lagerung der Getriebewelle abstützen, insbesondere an dessen Innenring.

Mit anderen Worten kann der Hohlwellenabschnitt sich bei dieser Ausführungsform bis in das Getriebegehäuse hinein erstrecken.

Ferner ist es vorteilhaft, wenn die elektrische Maschine mittels einer Befestigungseinrichtung starr oder verstellbar an einer Außenseite des Getriebegehäuses festgelegt ist.

Die Befestigungseinrichtung kann zum einen dazu ausgebildet sein, unterschiedliche Typen von elektrischen Maschinen an dem Getriebegehäuse festzulegen. Ferner kann die Befestigungseinrichtung dazu ausgelegt sein, die elektrische Maschine in einer Richtung quer zur Maschinenwelle verstellbar an dem Getriebegehäuse festzulegen, um beispielsweise die Spannung des Zugmittelgetriebes einzustellen.

In einer weiteren bevorzugten Ausführungsform kann zum Spannen bzw. Entspannen des Zugmittelgetriebes eine geeignete Spannrolle vorgesehen sein, die beispielsweise in einer Richtung quer zur Maschinenwelle verstellbar an der Außenseite des Getriebegehäuses festgelegt ist.

Bei einigen der oben beschriebenen Varianten ist das erste Zugmittelrad benachbart zu einem axialen Ende des Getriebegehäuses angeordnet.

In einer alternativen Ausführungsform ist die Getriebewelle eine zu der wenigstens einen Eingangswelle und zu der wenigstens einen Ausgangswelle parallel versetzt angeordneten Nebenwelle, an der ein Nebenzahnrad zur Verbindung der Nebenwelle mit der wenigstens einen Eingangswelle oder mit der wenigstens einen Ausgangswelle gelagert ist.

Bei dieser Ausführungsform kann die Nebenwelle in axialer Richtung kürzer als die axiale Erstreckung des Getriebegehäuses ausgebildet werden, und stellt im einfachsten Fall lediglich die Drehlagerung für das Nebenzahnrad bereit.

Das Nebenzahnrad steht vorzugsweise in Eingriff mit einem Zahnrad eines Gangradsatzes der Getriebeanordnung, bei dem es sich um ein Festrad oder ein Losrad handeln kann.

Bei Anwendung der erfindungsgemäßen Lehre auf ein Doppelkupplungsgetriebe, das eine Eingangswellenanordnung mit einer ersten, sich über die gesamte axiale Länge des Getriebegehäuses erstreckenden Eingangswelle und einer zweiten, sich nur über einen Teil der axialen Länge des Getriebegehäuses erstreckenden, als Hohlwelle ausgebildeten Eingangswelle aufweist, kann bei dieser Variante das Nebenzahnrad zudem mit einem Zahnrad in Eingriff stehen, das mit der Hohlwelle verbunden oder verbindbar ist. Demzufolge kann bei dieser Ausführungsform eine Verbindung der elektrischen Maschine nicht nur mit einer Eingangswelle des ersten Teilgetriebes erfolgen, das der ersten, sich über die gesamte axiale Länge erstreckenden Eingangswelle zugeordnet ist, sondern auch mit der zweiten Eingangswelle, die dem anderen Teilgetriebe zugeordnet ist.

Von besonderem Vorzug ist es hierbei, wenn das Getriebegehäuse ein erstes, dem Verbrennungsmotor zugewandtes axiales Ende und ein zweites, dem Verbrennungsmotor abgewandtes axiales Ende aufweist, wobei das Zugmittelgetriebe in axialer Richtung zwischen dem ersten und dem zweiten axialen Ende des Getriebegehäuses und radial außen an dem Getriebegehäuse angeordnet ist.

Bei den Varianten, bei denen das Zugmittelgetriebe über das Nebenzahnrad mit einer Getriebewelle verbindbar ist, ergibt sich zudem ein weites Spektrum an Übersetzungsmöglichkeiten, die teilweise über das Zugmittelgetriebe und teilweise über die Übersetzung zwischen dem Nebenzahnrad und dem Zahnrad eingerichtet werden können, das Teil eines Gangradsatzes der Getriebeanordnung ist.

Gegenüber einem konventionellen Antriebsstrang, der keine elektrische Maschine aufweist, können mit dem erfindungsgemäßen Antriebsstrang generell bessere Beschleunigungswerte, ein erhöhter Komfort, eine höhere Dynamik sowie eine Kraftstoffersparnis erzielt werden.

Gegenüber einem Hybrid-Antriebsstrang, bei dem die elektrische Maschine im Inneren des Getriebegehäuses integriert ist, ergibt sich eine vereinfachte Montage, eine bessere Systemabgrenzung zwischen Getriebe und elektrischer Maschine, eine Kosteneinsparung und insgesamt ein wenig komplexes Design zur Kraftübertragung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Ausführungsform eines erfindungsgemäßen Antriebsstranges;
- Fig. 2: eine axiale Detail-Schnittansicht eines erfindungsgemäßen Beispiels einer Verbindung eines Zugmittelrades mit einem Wellenabschnitt einer Getriebewelle;
- Fig. 3: eine schematische Darstellung einer weiteren Ausführungsform eines erfindungsgemäßen Antriebsstranges; und
- Fig. 4: eine schematische axiale Draufsicht auf eine weitere Ausführungsform eines erfindungsgemäßen Antriebsstranges.

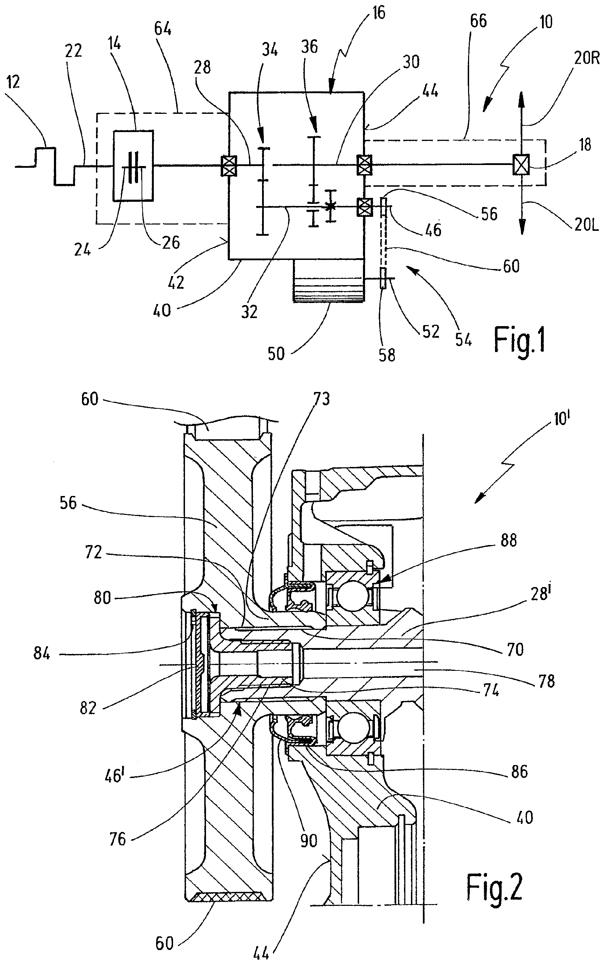

In Fig. 1 ist in schematischer Form ein Antriebsstrang für ein Kraftfahrzeug wie einen Personenkraftwagen dargestellt und generell mit 10 bezeichnet.

Der Antriebsstrang 10 weist einen Verbrennungsmotor 12, eine Kupplungsanordnung 14, ein Getriebeanordnung 16, ein Differential 18 sowie angetriebene Räder 20L, 20R auf.

Eine Kurbelwelle 22 des Verbrennungsmotors 12 ist mit einem Eingangsglied 24 der Kupplungsanordnung 14 vorzugsweise starr verbunden. Die Kupplungsanordnung weist im vorliegenden Fall ein einzelnes Ausgangsglied 26 auf, das mit einer Eingangswelle 28 der Getriebeanordnung 16 vorzugsweise starr verbunden ist. Die Getriebeanordnung 16 beinhaltet ferner eine Ausgangswelle 30 und eine Vorgelegewelle 32. Die Vorgelegewelle 32 ist über einen Konstanten-Radsatz 34 mit der Eingangswelle 28 verbunden. Ferner beinhaltet die Getriebeanordnung 16 eine Mehrzahl von Radsätzen zum Einrichten unterschiedlicher Gangstufen, von denen einer schematisch bei 36 gezeigt ist.

Die Ausgangswelle 30 der Getriebeanordnung 16 ist mit einem Eingang des Differentials 18 verbunden, das Antriebsleistung auf die angetriebenen Räder 20L, 20R verteilt. Die Getriebeanordnung 16 weist ein Getriebegehäuse 40 mit einem ersten axialen Ende 42, das dem Verbrennungsmotor 12 zugewandt ist, und einem zweiten axialen Ende 44 auf, das auf der dem Verbrennungsmotor 12 abgewandten Seite angeordnet ist

Die Vorgelegewelle 32 weist einen Wellenabschnitt 46 auf, der sich aus dem Getriebegehäuse 40 heraus erstreckt, und zwar auf der Seite des zweiten axialen Endes 44. Es versteht sich, dass zur Abdichtung zwischen dem Wellenabschnitt 46 und dem Getriebegehäuse eine geeignete Wellendichtung vorgesehen sein kann, die in Fig. 1 nicht näher bezeichnet ist.

Der Antriebsstrang 10 beinhaltet ferner eine elektrische Maschine 50, die parallel zu den Wellen der Getriebeanordnung 16 ausgerichtet und an einer Außenseite des Getriebegehäuses 40 festgelegt ist. Die elektrische Maschine 50 weist eine Motorwelle 52 auf, die parallel versetzt zu dem Wellenabschnitt 46 angeordnet ist. Die Motorwelle 52 ist über ein Zugmittelgetriebe 54 mit dem Wellenabschnitt 46 verbunden, und zwar außerhalb des Getriebegehäuses 40. Das Zugmittelgetriebe 54 weist ein erstes Zugmittelrad 56 auf, das fest mit dem Wellenabschnitt 46 verbunden ist, sowie ein zweites Zugmittelrad 58, das vorzugsweise fest mit der Motorwelle 52 verbunden ist. Ein die Zugmittelräder 56, 58 verbindendes Zugmittel ist in Fig. 1 schematisch mit 60 bezeichnet. Das Zugmittel kann eine Kette oder ein Riemen sein, beispielsweise ein Keilriemen oder ein Zahnriemen.

Die Kupplungsanordnung 14 weist ein Kupplungsgehäuse 64 auf, das direkt an das Getriebegehäuse 40 angeflanscht sein kann, wie es in Fig. 1 schematisch angedeutet ist. Ferner weist das Differential 18 ein Differentialgehäuse 66 auf, das separat von dem Getriebegehäuse 40 ausgebildet sein kann, jedoch auch mit dem Getriebegehäuse 40 integriert sein kann, wie es in Fig. 1 schematisch angedeutet ist.

Der Antriebsstrang 10 der Fig. 1 weist ein Layout auf, das für den Längseinbau in einem Kraftfahrzeug ausgelegt ist. Der Antriebsstrang 10 kann jedoch auch für einen Quereinbau in einem Kraftfahrzeug ausgelegt sein.

Vorzugsweise ist das Zugmittelgetriebe 54 benachbart zu dem zweiten axialen Ende 44, also auf der dem Verbrennungsmotor 12 abgewandten Seite des Getriebegehäuses 40 angeordnet. Zum Spannen beziehungsweise Entspannen des Zugmittels kann eine separate Spannrolle vorgesehen sein, die außen an dem Getriebegehäuse verstellbar festlegbar ist. Alternativ ist es möglich, die elektrische Maschine 5 in einer Richtung quer zur Erstreckung der Motorwelle 52 verstellbar an dem Getriebegehäuse 40 festzulegen.

Aus der Darstellung der Fig. 1 ergibt sich, dass es alternativ auch möglich ist, die Vorgelegewelle 32 sich nicht aus dem Getriebegehäuse 40 heraus erstreckend auszubilden, sondern das erste Zugmittelrad 56 beispielsweise an der Ausgangswelle 30 der Getriebeanordnung 16 festzulegen. Bei einer Ausbildung des Antriebsstranges für den Front-Quereinbau im Kraftfahrzeug erstreckt sich die Eingangswelle häufig über die gesamte Länge des Getriebegehäuses 40, so dass es in diesem Fall auch möglich ist, die Eingangswelle so auszubilden, dass sich ein Wellenabschnitt hiervon axial aus dem Getriebegehäuse 40 heraus erstreckt, und zwar auf der Seite des axialen Endes 44. Auf diese Weise ist es möglich, die elektrische Maschine mit einer Eingangswelle der Getriebeanordnung zu verbinden.

Generell ist es natürlich auch möglich, das Zugmittelgetriebe 54 auf der dem Verbrennungsmotor 12 zugewandten Seite, also an dem ersten axialen Ende 42 anzuordnen.

Schließlich ist es möglich, eine Nebenwelle in der Getriebeanordnung 16 vorzusehen, die axial kürzer ist als das Getriebegehäuse 40 und sich in einem Bereich zwischen den axialen Enden 42, 44 aus einem mittleren Abschnitt des Getriebegehäuses 40 heraus erstreckt, wie es nachstehend noch beschrieben werden wird. In diesem Fall kann das Zugmittelgetriebe 54 in axialer Richtung auch zwischen den zwei axialen Enden 42, 44 des Getriebegehäuses 40 angeordnet sein.

Fig. 2 zeigt eine weitere Ausführungsform eines Antriebsstranges 10', der hinsichtlich Aufbau und Funktionsweise generell dem Antriebsstrang 10 der Fig. 1 entspricht. Gleiche Elemente sind daher durch gleiche Bezugszeichen gekennzeichnet. Im Folgenden werden im Wesentlichen die Unterschiede erläutert.

So zeigt Fig. 1 eine Eingangswelle 28', die sich in einer axialen Richtung aus dem Getriebegehäuse 40 heraus erstreckt und einen Wellenabschnitt 46' aufweist, der außerhalb des Getriebegehäuses 40 liegt. Der Wellenabschnitt 46' weist einen Verzahnungsabschnitt 70 auf. Das erste Zugmittelrad 56 weist eine Durchgangsbohrung mit einem Gegenverzahnungsabschnitt 72 auf, derart, dass das erste Zugmittelrad 56 in axialer Richtung auf den Wellenabschnitt 46' aufgeschoben werden kann.

Das erste Zugmittelrad 56 weist einen Hohlwellenabschnitt 73 auf, der sich zumindest teilweise in das Getriebegehäuse 40 hinein erstreckt, also auf der dem Getriebegehäuse 40 zugewandten Seite des ersten Zugmittelrades 56 ausgebildet ist.

Das erste Zugmittelrad 56 ist mittels einer Schraube 74 axial an dem Wellenabschnitt 46' festgelegt. Zu diesem Zweck weist die Eingangswelle 28' eine Gewindebohrung 76 auf, die konzentrisch zu einer Axialbohrung 78 ausgebildet ist, die optional vorgesehen sein kann, beispielsweise zur Ölführung oder zur Gewichtsreduktion.

Das erste Zugmittelrad 56 weist auf der dem Getriebegehäuse 40 abgewandten Seite eine zu der Durchgangsbohrung koaxial vorgesehene Befestigungsbohrung 80 auf, die einen größeren Durchmesser aufweist als die Gewindebohrung 76 und deren Durchmesser an den Durchmesser eines Kopfes der Schraube 74 angepasst ist. Im dargestellten Befestigungszustand greift der Kopf der Schraube 74 folglich in axialer Richtung an einer Bodenschulter der Befestigungsbohrung 80 an und fixiert auf diese Weise axial das erste Zugmittelrad 56 an der Eingangswelle 28'. In der Befestigungsbohrung 80 ist vorzugsweise ferner ein Dichtungsstopfen 82 aufgenommen, der vorzugsweise mittels eines Sprengringes 84 in axialer Richtung in der Befestigungsbohrung 80 axial fixiert ist. Der Befestigungsstopfen 82 liegt folglich zwischen dem Sprengring 84 und dem Kopf der Schraube 74 und dichtet die Befestigungsanordnung zwischen erstem Zugmittelrad 56 und Eingangswelle 28' fluiddicht ab.

Das Getriebegehäuse 40 weist konzentrisch zu der Eingangswelle 28' einen Gehäuseausschnitt 86 auf. Der Hohlwellenabschnitt 73 des ersten Zugmittelrades 56 erstreckt sich in axialer Richtung durch den Gehäuseausschnitt 86 hindurch. Zwischen einer Innenseite des Gehäuseausschnittes 86 und einem Außenumfang des Hohlwellenabschnittes 73 ist eine Wellendichtung 90 festgelegt, die für eine fluiddichte Abdichtung zwischen Innenraum und Außenraum des Getriebegehäuses 40 sorgt. Die Wellendichtung 90 ist benachbart zu einem Wellenlager 88, mittels dessen die Eingangswelle 28' benachbart zu dem zweiten axialen Ende 44 drehbar an dem Getriebegehäuse 40 gelagert ist. Der Hohlwellenabschnitt 73 stützt sich in radialer Richtung vorzugsweise an dem Wellenlager 88 ab, und zwar vorzugsweise an einem Innenring hiervon.

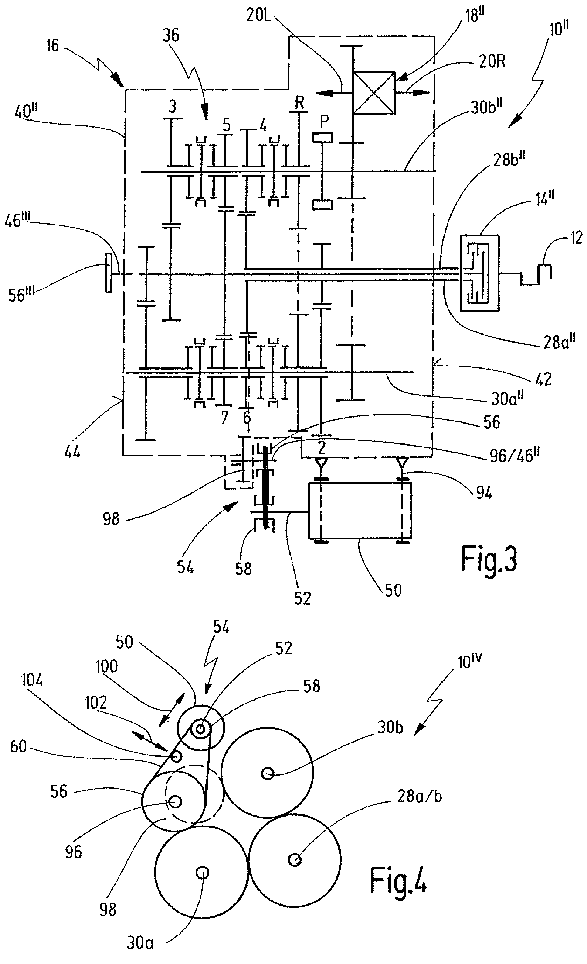

Fig. 3 zeigt eine weitere Ausführungsform eines Antriebsstranges 10", der hinsichtlich Aufbau und Funktionsweise generell dem Antriebsstrang der Fig. 10 der Fig. 1 oder 2 entspricht. Gleiche Elemente sind daher durch gleich Bezugszeichen gekennzeichnet. Im Folgenden werden im Wesentlichen die Unterschiede erläutert.

Der Antriebsstrang 10' beinhaltet eine Getriebeanordnung 16 in Form eines Doppelkupplungsgetriebes, das für den Front-Querbeinbau in einem Kraftfahrzeug ausgelegt ist. Die Kupplungsanordnung 14" beinhaltet zwei Reibkupplungen, deren Ausgangsglieder mit einer ersten Eingangswelle 28a" und einer hierzu konzentrischen Hohlwelle in Form einer zweiten Eingangswelle 28b" verbunden sind. Die erste Eingangswelle 28a" erstreckt sich über die gesamte Länge des Getriebegehäuses 40" und kann beispielsweise auf dem dem Verbrennungsmotor 12 abgewandten Ende (zweite axiale Seite 44) aus dem Getriebegehäuse 40' austreten, wie es durch einen Wellenabschnitt 46"' schematisch angedeutet ist, an dem ein erstes Zugmittelrad 56"' festgelegt ist. Diese Variante ist in Fig. 3 jedoch lediglich der Vollständigkeit halber gezeigt, da die Verbindung zwischen Getriebeanordnung 16 und elektrischen Maschinen hier generell auf andere Weise erfolgt, wie nachfolgend beschrieben wird.

Die Getriebeanordnung 16 beinhaltet ferner eine erste Ausgangswelle 30a" und eine zweite Ausgangswelle 30b", die jeweils parallel versetzt zu der Eingangswellenanordnung angeordnet sind und an denen Losräder gelagert sind, die mittels jeweiliger Schaltkupplungen mit der ihnen zugeordneten Welle verbindbar sind, wie es auf dem Gebiet der Doppelkupplungsgetriebe allgemein bekannt ist. Die Vorwärtsgangstufen sind hier mit 1 bis 7 bezeichnet. Ferner ist eine Rückwärtsgangstufe R gezeigt, und eine Parksperrenanordnung bei P.

Die Ausgangswellen 30a", 30b" weisen jeweils ein Abtriebsrad auf, wobei die Abtriebsräder jeweils mit einem Eingangsglied eines Differentials 18" in Eingriff stehen, das innerhalb des Getriebegehäuses 40 angeordnet ist.

Die elektrische Maschine 50 ist in axialer Richtung gesehen zwischen den zwei axialen Enden 42, 44 radial außen an dem Getriebegehäuse 40 festgelegt, und zwar mittels einer Befestigungsvorrichtung 94, die starr oder verstellbar sein kann.

In dem Getriebegehäuse 40 ist ferner eine Nebenwelle 96 drehbar gelagert, und zwar parallel versetzt zu den Eingangswellen 28a", 28b" sowie parallel versetzt zu den Ausgangswellen 30a", 30b". Hierzu weist das Getriebegehäuse 40 eine radiale Auswölbung auf, die in Fig. 3 nicht näher bezeichnet ist. An der Nebenwelle 96 ist ein Nebenzahnrad 98 festgelegt. Die Nebenwelle 96 erstreckt sich in axialer Richtung aus dem Getriebegehäuse 40 heraus, und zwar in einem Bereich zwischen den zwei axialen Enden 42, 44. Die Motorwelle 52 der elektrischen Maschine 50 erstreckt sich bei dieser Ausführungsform in einer Richtung von dem Verbrennungsmotor 12 weg und ist benachbart zu dem ersten axialen Ende 42 angeordnet, kann jedoch auch benachbart zu dem zweiten axialen Ende 44 angeordnet sein. In letzterem Fall würde sich die Motorwelle 52 hin zu dem Verbrennungsmotor 12 erstrecken. Die Motorwelle 52 ist wie bei den Ausführungsformen zuvor mit einem zweiten Zugmittelrad 58 verbunden, das mit einem ersten Zugmittelrad 56 über ein Zugmittel 60 verbunden ist, wobei das erste Zugmittelrad 56 an einem Wellenabschnitt 46" festgelegt ist, der durch die Nebenwelle 96 gebildet ist.

Bei dieser Ausführungsform kann das Nebenzahnrad 98, wie gestrichelt angedeutet, beispielsweise mit einem Zahnrad in Eingriff stehen, das starr mit der zweiten Eingangswelle 28b" verbunden ist, um auf diese Weise die elektrische Maschine an das zweite Teilgetriebe anbinden zu können, das den geraden Gangstufen zugeordnet ist. Alternativ ist es natürlich auch möglich, die Nebenwelle 96 beziehungsweise dessen Nebenzahnrad 98 und das Zugmittelgetriebe 54 in axialer Richtung so anzuordnen, dass das Nebenzahnrad 98 mit einem Rad in Eingriff steht, das starr mit der ersten Eingangswelle 28a" verbunden ist. Generell ist es auch denkbar, das Nebenzahnrad 98 in axialer Richtung verschiebbar auszubilden, um es alternativ mit einem Zahnrad der ersten Eingangswelle 28a" oder einem Zahnrad der zweiten Eingangswelle 28b" zu verbinden. Auch ist es möglich, eine entsprechende Schaltkupplungsanordnung hierfür vorzusehen. Während bei der Ausführungsform, bei der das erste Zugmittelrad 56"' mit der ersten Eingangswelle 28a" verbunden ist, die Übersetzung zwischen elektrischer Maschine 50 und Eingangswelle 28a" alleine durch das Zugmittelgetriebe 54 bestimmt wird, wird diese Gesamtübersetzung bei der Ausführungsform der Fig. 3 durch die Übersetzung des Zugmittelgetriebes 54 und durch die Übersetzung zwischen dem Nebenzahnrad 98 und dem mit der jeweiligen Eingangswelle verbundenen Zahnrad bestimmt.

Fig. 4 zeigt in schematischer Form einen Antriebsstrang 10^{IV}, der hinsichtlich Aufbau und Funktionsweise generell dem Antriebsstrang 10^{II} der Fig. 3 entsprechen kann. Gleiche Elemente sind daher durch gleiche Bezugszeichen gekennzeichnet. Im Folgenden werden im Wesentlichen die Unterschiede erläutert.

Fig. 4 zeigt hier eine schematische axiale Draufsicht auf die Getriebeanordnung, aus der zu sehen ist, dass die zwei Ausgangswellen 30a, 30b jeweils mit Zahnrädern der Eingangswellen 28a/28b in Eingriff stehen. Bei einem automatisierten Schaltgetriebe können zwei solche Ausgangswellen 30a, 30b auch mit einer Eingangswellenanordnung verbunden sein, die nur eine einzelne Eingangswelle aufweist.

Ferner ist zu erkennen, dass bei der Ausführungsform der Fig. 4 eine Nebenwelle 96 in einem Winkelbereich angeordnet ist, der durch Verbindungslinien zwischen der Eingangswellenanordnung 28a/b und der ersten Ausgangswelle 30a sowie einer Verbindungslinie zwischen der Eingangswellenanordnung 28a/b und der zweiten Ausgangswelle 30b gebildet ist. Im vorliegenden Fall steht das Nebenzahnrad 98 in Eingriff mit einem Zahnrad, das mit der ersten Ausgangswelle 30a verbunden ist. Alternativ kann, wie gestrichelt dargestellt, das Nebenzahnrad 98 auch mit einem Zahnrad in Eingriff stehen, das mit der zweiten Ausgangswelle 30b verbunden ist. In gleicher Weise ist es möglich, die Nebenwelle 96 so anzuordnen, dass das Nebenzahnrad 98 mit einem Zahnrad der Eingangswellenanordnung 38a/b in Eingriff steht, wie es oben in Bezug auf Fig. 3 beschrieben worden ist.

Das Zugmittelgetriebe 54 beinhaltet vorliegend Spannmittel 100, um das Zugmittel 60 zu spannen oder zu entspannen (letzteres beispielsweise zu Demontagezwecken). Die Spannmittel 100 können beispielsweise durch eine Verstellbarkeit der elektrischen Maschine 50 in einer Richtung quer zur Motorwelle 52 gebildet sein, wie es in Fig. 4 durch einen Pfeil angedeutet ist.

Ferner ist es möglich, alternativ oder zusätzlich Spannmittel 102 vorzusehen, die beispielsweise mittels einer Spannrolle 104 gebildet sind, die außen an einem Getriebegehäuse in einer Richtung quer zur Motorwelle 52 verstellbar ausgebildet ist.

Die Spannmittel 100 oder 102 können ferner als elastische Spannmittel ausgebildet sein, um dauerhaft eine weitgehend konstante Spannung des Zugmittels zu erhalten.

## Patentansprüche

1. Antriebsstrang (10) für ein Kraftfahrzeug, mit
- einem Verbrennungsmotor (12), der eine Kurbelwelle (22) aufweist und zur Bereitstellung von Antriebsleistung für das Kraftfahrzeug ausgelegt ist;
- einer Kupplungsanordnung (14), die ein Eingangsglied (24) und wenigstens ein Ausgangsglied (26) aufweist, wobei das Eingangsglied (24) mit der Kurbelwelle (22) verbunden ist;
- einer Getriebeanordnung (16) zur Einrichtung einer Mehrzahl von Gangstufen (1-7, R), wobei die Getriebeanordnung (16) ein Getriebegehäuse (40), wenigstens eine Eingangswelle (28) und wenigstens eine Ausgangswelle (30) aufweist, wobei die Ausgangswelle (30) mit angetriebenen Rädern (20) des Kraftfahrzeuges verbunden ist, und
- einer elektrischen Maschine (50), die zur Bereitstellung von Antriebsleistung für das Kraftfahrzeug ausgelegt ist und mit einer Getriebewelle (32; 28'; 96; 28a) der Getriebeanordnung (16) verbunden ist,
wobei die Getriebewelle (32; 28'; 96; 28a) einen Wellenabschnitt (46) aufweist, der sich aus dem Getriebegehäuse (40) heraus erstreckt und mit der elektrischen Maschine (50) über ein Zugmittelgetriebe (54) verbunden ist,
wobei das Zugmittelgetriebe (54) ein erstes Zugmittelrad (56) aufweist, das einen sich um den Wellenabschnitt (46) der Getriebewelle (28') herum erstreckenden Hohlwellenabschnitt (73) aufweist, wobei zwischen einem Gehäuseausschnitt (86) des Getriebegehäuses (40) und dem Außenumfang des Hohlwellenabschnittes (73) des ersten Zugmittelrades (56) eine Wellendichtung (90) angeordnet ist, und wobei der Wellenabschnitt (46), der sich aus dem Getriebegehäuse (40) heraus erstreckt, einen Verzahnungsabschnitt (70) aufweist,
**dadurch gekennzeichnet, dass** das erste Zugmittelrad (56) des Zugmittelgetriebes (54) einen Gegenverzahnungsabschnitt (72) aufweiset, wobei das erste Zugmittelrad (56) auf den Verzahnungsabschnitt (70) aufgesteckt ist.

2. Antriebsstrang nach Anspruch 1, **dadurch gekennzeichnet, dass** die Getriebewelle die wenigstens eine Eingangswelle (28'; 28a") der Getriebeanordnung (16) oder eine mit der Eingangswelle über eine feste Übersetzung verbundene Vorgelegewelle (32) der Getriebeanordnung ist.

3. Antriebsstrang nach Anspruch 1 oder 2, **dadurch gekennzeichnet, dass** das Getriebegehäuse ein erstes, dem Verbrennungsmotor (12) zugewandtes axiales Ende (42) und ein zweites, dem Verbrennungsmotor abgewandtes axiales Ende (44) aufweist, wobei das Zugmittelgetriebe (54) an dem zweiten axialen Ende (44) angeordnet ist.

4. Antriebsstrang nach einem der Ansprüche 1 - 3, **dadurch gekennzeichnet, dass** der Wellenabschnitt (46) der Getriebewelle eine axiale Gewindebohrung (76) aufweist und wobei das erste Zugmittelrad (56) mittels einer Schraube (74) axial an dem Wellenabschnitt (46) festgelegt ist.

5. Antriebsstrang nach Anspruch 4, **dadurch gekennzeichnet, dass** das erste Zugmittelrad (56) eine axiale Befestigungsbohrung (80) aufweist, in der ein Kopf der Schraube (74) und ein Dichtungselement (82) aufgenommen sind.

6. Antriebsstrang nach Anspruch 1, **dadurch gekennzeichnet, dass** sich der Hohlwellenabschnitt (73) in axialer Richtung an einem Wellenlager (88) abstützt, das zur Lagerung der Getriebewelle (32; 28'; 96; 28a) dient und auf der Innenseite des Getriebegehäuses (40) angeordnet ist.

7. Antriebsstrang nach einem der Ansprüche 1 - 6, **dadurch gekennzeichnet, dass** die elektrische Maschine (50) mittels einer Befestigungseinrichtung (94) starr oder verstellbar an einer Außenseite des Getriebegehäuses (40) festgelegt ist.

8. Antriebsstrang nach einem der Ansprüche 1 - 7, **dadurch gekennzeichnet, dass** die Getriebewelle eine zu der wenigstens einen Eingangswelle (28) und zu der wenigstens einen Ausgangswelle (30) parallel versetzt angeordnete Nebenwelle (96) ist, an der ein Nebenzahnrad (98) zur Verbindung der Nebenwelle (96) mit der wenigstens einen Eingangswelle (28) oder mit der wenigstens einen Ausgangswelle (30) gelagert ist.

9. Antriebsstrang nach einem der Ansprüche 1, 2, 4 - 7, **dadurch gekennzeichnet, dass** die Getriebewelle eine zu der wenigstens einen Eingangswelle (28) und zu der wenigstens einen Ausgangswelle (30) parallel versetzt angeordnete Nebenwelle (96) ist, an der ein Nebenzahnrad (98) zur Verbindung der Nebenwelle (96) mit der wenigstens einen Eingangswelle (28) oder mit der wenigstens einen Ausgangswelle (30) gelagert ist, wobei das Getriebegehäuse (40) ein erstes, dem Verbrennungsmotor zugewandtes axiales Ende (42) und ein zweites, dem Verbrennungsmotor abgewandtes axiales Ende (44) aufweist, wobei das Zugmittelgetriebe (54) in axialer Richtung zwischen dem ersten und dem zweiten axialen Ende (42, 44) des Getriebegehäuses (40) und radial außen an dem Getriebegehäuse (40) angeordnet ist.

## Claims

1. Drive train (10) for a motor vehicle, comprising
- an internal combustion engine (12) which has a crankshaft (22) and is designed to provide drive power for the motor vehicle;
- a clutch arrangement (14) which has an input member (24) and at least one output member (26), the input member (24) being connected to the crankshaft (22);
- a transmission arrangement (16) for implementing a plurality of gear stages (1-7, R), the transmission arrangement (16) having a transmission housing (40), at least one input shaft (28) and at least one output shaft (30), the output shaft (30) being connected to driven wheels (20) of the motor vehicle, and
- an electric machine (50) which is designed to provide drive power for the motor vehicle and is connected to a transmission shaft (32; 28'; 96; 28a) of the transmission arrangement (16),
wherein the transmission shaft (32; 28'; 96, 28a) has a shaft section (46) which extends from the transmission housing (40) and is connected to the electric machine (50) via a traction drive mechanism (54),
wherein the traction drive mechanism (54) has a first traction drive wheel (56) which has a hollow shaft section (73) extending around the shaft section (46) of the transmission shaft (28'), a shaft seal (90) being arranged between a housing opening (86) of the transmission housing (40) and the outer circumference of the hollow shaft section (73) of the first traction drive wheel (56),
and wherein the shaft section (46) which extends from the transmission housing (40) has a splined section (70),
**characterised in that** the first traction drive wheel (56) of the traction drive mechanism (54) has a complementary splined section (72), wherein the first traction drive wheel (56) is fitted to the splined section (70).

2. Drive train according to Claim 1, **characterised in that** the transmission shaft is the at least one input shaft (28'; 28a") of the transmission arrangement (16) or a lay-shaft (32) of the transmission arrangement which is connected to the input shaft via a fixed transmission ratio.

3. Drive train according to Claim 1 or 2, **characterised in that** the transmission housing has a first axial end (42) oriented towards the internal combustion engine (12) and a second axial end (44) oriented away from the internal combustion engine, the traction drive mechanism (54) being arranged at the second axial end (44).

4. Drive train according to any one of Claims 1 - 3, **characterised in that** the shaft section (46) of the transmission shaft has a threaded axial bore (76) and the first traction drive wheel (56) is fixed axially to the shaft section (46) by means of a screw (74).

5. Drive train according to Claim 4, **characterised in that** the first traction drive wheel (56) has an axial fixing bore (80) in which a head of the screw (74) and a sealing element (82) are received.

6. Drive train according to Claim 1, **characterized in that** the hollow shaft section (73) is supported in an axial direction by a shaft bearing (88) which shaft bearing serves to support the transmission shaft (32; 28'; 96; 28a) and is arranged on the inside of the transmission housing (40).

7. Drive train according to any one of Claims 1 - 6, **characterised in that** the electric machine (50) is fixed rigidly or adjustably to an outer side of the transmission housing (40) by means of a fastening device (94).

8. Drive train according to any one of Claims 1 - 7, **characterised in that** the transmission shaft is a countershaft (96) which is arranged parallel to and offset from the at least one input shaft (28) and parallel to and offset from the least one output shaft (30), on which countershaft (96) a secondary gear wheel (98) for connecting the countershaft (96) to the at least one input shaft (28) or to the least one output shaft (30) is mounted.

9. Drive train according to anyone of claims 1, 2, 4 - 7, **characterised in that** the transmission shaft is a countershaft (96) which is arranged parallel to and offset from the at least one input shaft (28) and parallel to and offset from the least one output shaft (30), on which countershaft (96) a secondary gear wheel (98) for connecting the countershaft (96) to the at least one input shaft (28) or to the least one output shaft (30) is mounted, wherein the transmission housing (40) has a first axial end (42) oriented towards the internal combustion engine and a second axial end (44) oriented away from the internal combustion engine, the traction drive mechanism (54) being arranged in the axial direction between the first and second axial ends (42, 44) of the transmission housing (40) and radially on the outside of the transmission housing (40).

## Revendications

1. Chaîne cinématique (10) pour un véhicule automobile, comprenant
- un moteur à combustion interne (12), qui possède un vilebrequin (22) et qui est conçu pour délivrer de la puissance motrice pour le véhicule automobile ;
- un arrangement d'embrayage (14), qui possède un élément d'entrée (24) et au moins un élément de sortie (26), l'élément d'entrée (24) étant relié au vilebrequin (22) ;
- un arrangement de boîte de vitesses (16) destiné à établir une pluralité de rapports de transmission (1-7, R), l'arrangement de boîte de vitesses (16) possédant un carter de boîte de vitesses (40), au moins un arbre d'entrée (28) et au moins un arbre de sortie (30), l'arbre de sortie (30) étant relié à des roues motrices (20) du véhicule automobile ; et
- une machine électrique (50), qui est conçue pour délivrer de la puissance motrice pour le véhicule automobile et qui est reliée à un arbre de boîte de vitesses (32 ; 28' ; 96 ; 28a) de l'arrangement de boîte de vitesses (16),
l'arbre de boîte de vitesses (32 ; 28' ; 96 ; 28a) possédant une portion d'arbre (46), qui s'étend hors du carter de boîte de vitesses (40) et qui est reliée à la machine électrique (50) par le biais d'une transmission à élément de traction (54),
la transmission à élément de traction (54) possédant une première roue d'élément de traction (56), laquelle possède une portion d'arbre creux (73) qui s'étend autour de la portion d'arbre (46) de l'arbre de boîte de vitesses (28'), une garniture d'étanchéité d'arbre (90) étant disposée entre une portion de carter (86) du carter de boîte de vitesses (40) et le pourtour extérieur de la portion d'arbre creux (73) de la première roue d'élément de traction (56),
et la portion d'arbre (46) qui s'étend hors du carter de boîte de vitesses (40) possédant une portion à denture (70),
**caractérisée en ce que**
la première roue d'élément de traction (56) de la transmission à élément de traction (54) possède une portion à denture homologue (72), la première roue d'élément de traction (56) étant emmanchée sur la portion à denture (70).

2. Chaîne cinématique selon la revendication 1, **caractérisée en ce que** l'arbre de boîte de vitesses est l'au moins un arbre d'entrée (28' ; 28a") de l'arrangement de boîte de vitesses (16) ou un arbre intermédiaire (32) de l'arrangement de boîte de vitesses relié à l'arbre d'entrée par le biais d'un rapport de démultiplication fixe.

3. Chaîne cinématique selon la revendication 1 ou 2, **caractérisée en ce que** le carter de boîte de vitesses possède une première extrémité axiale (42) qui fait face au moteur à combustion interne (12) et une deuxième extrémité axiale (44) à l'opposé du moteur à combustion interne, la transmission à élément de traction (54) étant disposée sur la deuxième extrémité axiale (44).

4. Chaîne cinématique selon l'une des revendications 1 à 3, **caractérisée en ce que** la portion d'arbre (46) de l'arbre de boîte de vitesses possède un trou taraudé (76) axial et la première roue d'élément de traction (56) est fixée dans le sens axial sur la portion d'arbre (46) au moyen d'une vis (74).

5. Chaîne cinématique selon la revendication 4, **caractérisée en ce que** la première roue d'élément de traction (56) possède un trou de fixation axial (80) dans lequel sont accueillis une tête de la vis (74) et un élément d'étanchéité (82).

6. Chaîne cinématique selon la revendication 1, **caractérisée en ce que** la portion d'arbre creux (73) s'appuie dans le sens axial sur un palier d'arbre (88) qui sert à supporter l'arbre de boîte de vitesses (32 ; 28' ; 96 ; 28a) et qui est disposé sur le côté intérieur du carter de boîte de vitesses (40).

7. Chaîne cinématique selon l'une des revendications 1 à 6, **caractérisée en ce que** la machine électrique (50) est fixée de façon rigide ou positionnable sur un côté extérieur du carter de boîte de vitesses (40) au moyen d'un dispositif de fixation (94).

8. Chaîne cinématique selon l'une des revendications 1 à 7, **caractérisée en ce que** l'arbre de boîte de vitesses est un arbre auxiliaire (96) disposé décalé parallèlement à l'au moins un arbre d'entrée (28) et à l'au moins un arbre de sortie (30), sur lequel est montée une roue dentée auxiliaire (98) destinée à relier l'arbre auxiliaire (96) à l'au moins un arbre d'entrée (28) ou à l'au moins un arbre de sortie (30).

9. Chaîne cinématique selon l'une des revendications 1, 2, 4 à 7, **caractérisée en ce que** l'arbre de boîte de vitesses est un arbre auxiliaire (96) disposé décalé parallèlement à l'au moins un arbre d'entrée (28) et à l'au moins un arbre de sortie (30), sur lequel est montée une roue dentée auxiliaire (98) destinée à relier l'arbre auxiliaire (96) à l'au moins un arbre d'entrée (28) ou à l'au moins un arbre de sortie (30), le carter de boîte de vitesses (40) possédant une première extrémité axiale (42) qui fait face au moteur à combustion interne et une deuxième extrémité axiale (44) à l'opposé du moteur à combustion interne, la transmission à élément de traction (54) étant disposée dans le sens axial entre la première et la deuxième extrémité axiale (42, 44) du carter de boîte de vitesses (40) et dans le sens radial à l'extérieur sur le carter de boîte de vitesses (40).
